# EUROPEAN PATENT SPECIFICATION

(11) **EP 3 798 071 B1**
(45) Date of publication and mention of the grant of the patent: **01.03.2023**
(21) Application number: 19199164.5
(22) Date of filing: 24.09.2019
(51) Int. Cl.: B60T 13/26, B60T 15/20, B60T 15/22

(54) **PNEUMATIC VALVE FOR A BRAKE SYSTEM**
PNEUMATISCHES VENTIL FÜR EIN BREMSSYSTEM
SOUPAPE PNEUMATIQUE POUR UN SYSTÈME DE FREINAGE

(43) Date of publication of application: 31.03.2021
(73) Proprietor: ZF CV Systems Europe BV, 1170 Brussels (BE)
(72) Inventor: Couppee, Ulrich, 31863 Coppenbrügge (DE); Grzeskowiak, Adrian, 50-231 Wroclaw (PL); Riediger-Janisch, Karl-Heinz, 30455 Hannover (DE); Smardz, Marek, 67-400 Wschowa (PL)
(74) Representative: Rabe, Dirk-Heinrich

(56) References cited:
- EP-A1- 1 391 363
- EP-A1- 3 181 418
- WO-A1-98/26966
- US-A- 4 455 052
- US-A- 5 417 479
- US-A1- 2011 147 141

## Description

### TECHNICAL FIELD OF THE INVENTION

The present invention relates to a pneumatic valve for a pneumatic brake system and improvements thereof. In particular, the present invention relates a trailer control valve used in the pneumatic brake system of a vehicle. Such trailer control valves are typically used in combination with a pneumatic braking system that is present in either a towing vehicle (e.g., a tractor) or a trailer portion.

### BACKGROUND OF THE INVENTION

Pneumatic valves for the brake systems are known in the art. The pressurized air from an air reservoir has to be directed to the brakes associated with the wheels of the towing vehicle or the trailer portion at a suitable velocity and appropriate pressure magnitude. If the pneumatic valve is used for the braking applications of the trailer portion, they may generally be referred to as trailer control valves (as already mentioned above).

Such pneumatic valves generally not only assist in the supply of the pressurized air at the suitable velocity and the appropriate pressure magnitude, but also enable a vehicle driver to choose "when" to provide such a supply of the pressurized air during the braking of the vehicle (or e.g., towing vehicle) as well as its trailer, if applicable. Over years such pneumatic valves have been continuously developed. See, e.g., the online information provided here: http://inform.wabcoauto.com/intl/pdf/815/00/57/8150100573-11.pdf (accessible as of August 13, 2018) from the Applicant where general working principle and position of the trailer control valves or such pneumatic valves are explained in the context of the pneumatic brake circuits used in the vehicles.

One such pneumatic valve is the trailer control valve. An example of a trailer control valve is disclosed, for e.g., in the German patent publication DE102009032313A1 where an enclosure 30 (see Fig. 1) is provided at a top portion of trailer control valve 1. Trailer control valve 1 includes pneumatic pistons labeled as e.g., '29', '21' Said pneumatic pistons include plurality of steps and are placed within differently sized bores of a chamber of said trailer control valve. These differently sized bores can also be mentioned as slots. Wherever fluid tight sealing is necessary, in particular at the slots, sealing rings in association with the pneumatic pistons are provided to form an air-tight sealing.

Further, another pneumatic valve disclosed in a PCT publication WO2011/029495 is cited herewith. In particular, valve 1 (see Fig. 1) is provided with a safety ring 15 which prevents an upward longitudinal movement of a chamber partition member 6 and to firmly secure the longitudinal position of said member within a housing of valve 1.

US 2011/147141 A1 discloses a valve device that is intended for a pneumatic brake system of a commercial vehicle and that comprises a valve housing, a pilot piston, which is guided in an axially displaceable manner in the valve housing by way of radial seals, a first working port, a second working port, a pneumatic control input, and an air bleed port.

WO 98/26966 A1 relates in general to a vehicle brake system and in particular to a brake system having a pilot-operated bossost valve located remotely from a master cylinder.

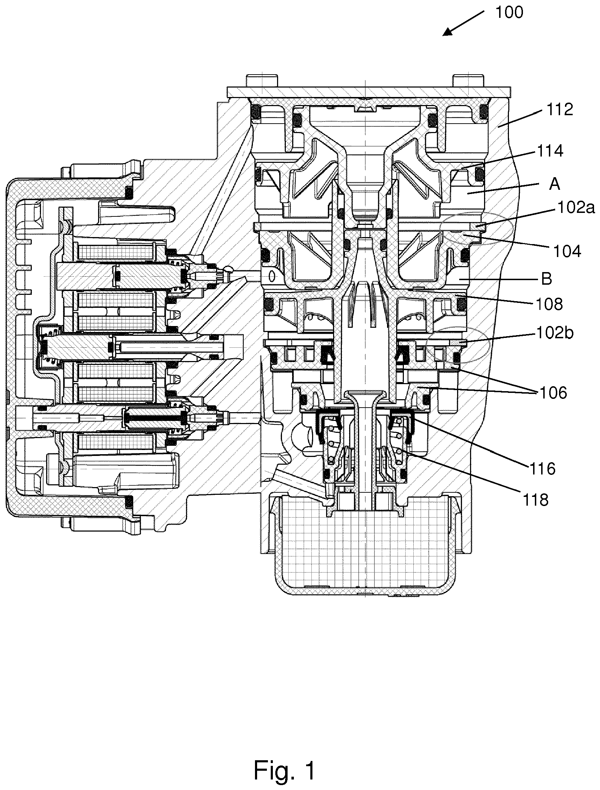

On the same vein, Fig.1 of the present application illustrates a cross sectional view of a trailer control valve 100 (existing or conventional) with plurality of linearly movable pneumatic pistons such as the ones labeled as 114, 108, and 106 in Fig. 1. Pistons 114 and 108 are provided with a first guide member 104, which is immovable and secured firmly within a slot in housing 112 using a safety ring 102a. A second guide member 106 is provided in association with piston 108. Just below said member 106, a stopping element 106 to prevent an upward longitudinal movement of a valve 116 due to an extension force exerted by spring 118. It is however more importantly noted that, similar to first guide member 104, second guide member 106 is also immovable and firmly secured within a slot in housing 112 using another safety ring 102b. The location of safety rings 102a and 102b are circled in Fig. 1 for the sake of illustration. Further components of trailer control valve 100 are not labeled and/or explained herewith as they are not believed to be necessary to understand the present invention. The function of trailer control valve 100 is also not provided here it is deemed irrelevant for the understanding the present invention.

What is relevant for understanding the underlying invention is, for instance, the provision of safety rings 102a and 102b in association with guide members 104 and 106 to secure said guide members firmly to the respective slots of housing 112. Proving safety rings 102a and 102b within the trailer control valves may have certain technical disadvantages including the difficulties while manufacturing said housing 112 with precisely machined slots to incorporate safety rings 102a and 102b. A skilled person would recognize that such machining may increase the possibility of having metal or aluminum chips, which contribute to a risk of leakage between separated chambers within valve 100. For instance, present of metal or aluminum chips between e.g., ring 102a and internal walls of housing 112 can enable leakage of air between a chamber present below said ring 102a and a chamber above said ring 102a. For the sake of illustration, said chamber below ring 102a is labeled as second chamber 'B' and said chamber above ring 102a is labeled as first chamber 'A'. Since high pressure pneumatic force is involved within valve 100, such a risk of leakage has to be prevented at all costs. Furthermore, a skilled person would recognize that assembling retaining rings such as 102a and 102b is also a complicated assembly step which consumes relatively more time.

For a global manufacturer of the trailer control valves such as the Applicant of the present application, such complicated assembly steps are expensive in proportion to the volume of the manufacture.

It is the object of the present invention to provide a pneumatic trailer control valve that addresses the above-mentioned technical issues and/or generally an improved pneumatic valve and/or trailer control valve for the pneumatic braking systems in a vehicle.

### SUMMARY OF THE INVENTION

In accordance with an embodiment, a pneumatic valve for controlling brakes of a trailer portion attached to a vehicle portion of a vehicle is provided. Alternatively, the pneumatic valve of the present invention can also be referred to as a trailer control valve. The valve comprises a cover being symmetric around a longitudinal axis, wherein the cover includes a cylindrical extension, and a first stationary member arranged coaxial to the cover, and including a top surface, wherein the top surface is in direct contact with the cylindrical extension of the cover.

The present invention also entails that the cylindrical extension is integral with the cover and is configured to facilitate securing the position of the first stationary member.

The pneumatic valve includes a housing, wherein the housing comprises a first slot for receiving the first stationary member, as well as an internal passageway that facilitates flow of pressurized fluid; further the cover includes a fluid passageway as well, that facilitates flow of pressurized fluid, wherein the internal passageways of the housing and of the cover are directly connected.

In an embodiment of the present invention
the first stationary member is locked in its position due to the direct contact with the cylindrical extension on the top surface and due to the first slot of the housing at the bottom surface.

In another embodiment of the present invention or the same embodiment, the pneumatic valve as mentioned above includes the cover that includes a stepped portion and the housing includes a second slot that is configured to receive the stepped portion of the cover.

In yet another embodiment, the pneumatic valve of as mentioned above includes a plurality of sealing rings between an internal surface of the housing and the first stationary member and also between said internal surface of the housing and the cover. In the same embodiment or in a further limiting embodiment, at least one sealing ring of the plurality of sealing rings is provided at the stepped portion of the cover.

Furthermore, in an illustrative embodiment, the fluid passageway of the cover and the internal passageway of the housing are directly or indirectly connected to a relief port for ventilating the pressurized fluid. At the region where the relief port is present in association with the pneumatic valve, a silencer can also be provided to reduce noise generated due to release of the pressurized fluid via the relief port.

In accordance with a further illustrative embodiment, the pneumatic valve as explained above further comprises a first port (P22) for supplying control pressure for controlling the brakes associated with wheels of the trailer portion, and a second port (P21) to provide supply pressure to the brakes associated with the wheels of the trailer portion, and wherein each of the first and second ports (P21 and P22) are demarcated using different colors, preferably the second port (P22) with yellow and the first port (P21) with red.

Further details and the technical advantages of various embodiments are described in detail in the detailed description provided in association with the accompanying drawings.

### BRIEF DESCRIPTION OF THE ACCOMPANYING DRAWINGS

Fig. 1 illustrates a cross-sectional view of a conventional trailer control valve;
Fig. 2 illustrates a pneumatic valve, in particular a trailer control valve in accordance with an embodiment of the present invention; and
Fig. 3 illustrates how the pneumatic valve is connected to a trailer in accordance with an embodiment of the present invention.

### DETAILED DESCRIPTION OF THE ACCOMPANYING DRAWINGS

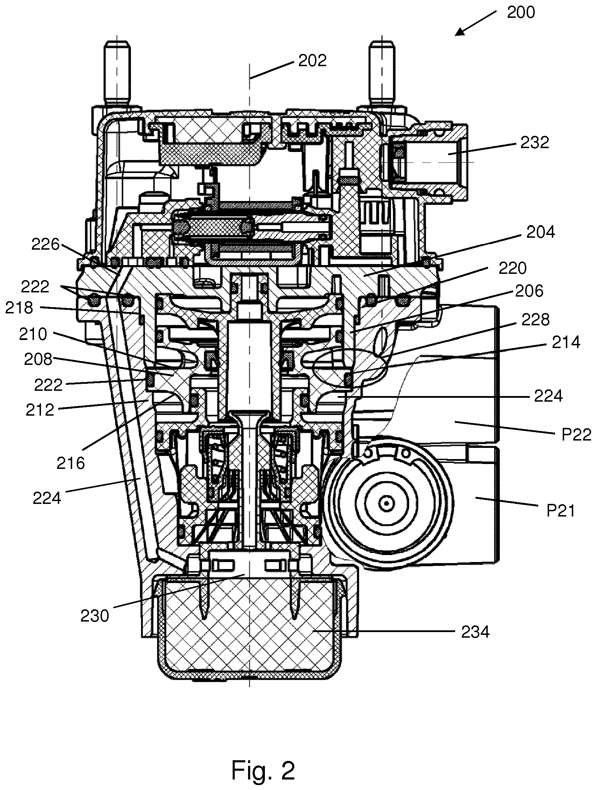

Fig. 2 illustrates a pneumatic valve 200, in particular trailer control valve 200 in accordance with an embodiment of the present invention.

In accordance with an embodiment, pneumatic valve 200 is provided, that is preferably for controlling brakes of a trailer portion attached a vehicle portion. Pneumatic valve 200 comprises a cover 204 being symmetric around a longitudinal axis 202, wherein cover 204 includes a cylindrical extension 206.

Pneumatic valve 200 also includes a first stationary member 208 arranged coaxial to cover 204, and including a top surface 210, wherein top surface 210 is in direct contact with cylindrical extension 206 of cover 204. In accordance with the present embodiment, cylindrical extension 206 is integral with cover 204 and is configured to facilitate securing the position of first stationary member 208. It is noted herewith that cylindrical extension 206 is configured to assist in holding first stationary member 208 in its position by applying a holding force from the top side. This eliminates any usage of additional safety rings. In this regard, reference is made to rings 102a and 102b as shown in Fig. 1 and also described above. Prevention of using such safety rings provide the technical advantages such as ease of manufacture, assembly of components of pneumatic valve 200 compared to valve 100 shown in fig. 1. In particular, additional step of forming a groove to hold safety ring 102a or 102b, particularly by machining housing 112 of fig. 1 is eliminated by simply using cylindrical extension 206 to perform same function. Furthermore, if housing 112 of Fig. 1 is made of metal, the formation of metal chips due to machining and or during usage is prevented or eliminated between an internal surface of housing 112 and rings 102a and 102b. Such technical advantages will be derivable to the skilled person. Needless to say, since the presence of metal chips is prevented, as a consequence, the possibility of leakage of high pressure fluid from chamber A (see Fig. 1) to chamber B (see Fig. 1) or vice versa is also preventively eliminated.

In accordance with the same or another embodiment, pneumatic valve 200 includes a housing 212, wherein housing 212 comprises a first slot 214 for receiving first stationary member 208, in particular a bottom surface 216 of said first stationary member 208, and preferably wherein first stationary member 208 is locked in its position due to the direct contact with cylindrical extension 206 on top surface 210 and due to first slot 214 of housing 212 at bottom surface 216. A contact region within valve 200 showing direct contact with cylindrical extension 206 on top surface 210 is marked with reference '228'. The technical advantage is to prevent both the upward and downward movements of first stationary member 208 by using cylindrical extension 206 at the top side and using first slot 214 at the bottom side. By this manner, a more secured locking of the position of first stationary member 208 is achieved.

In accordance with the present embodiment, cover 204 includes a stepped portion 218 and housing 212 includes a second slot 220 that is configured to receive stepped portion 218 of cover 204. Cover 204 is shown to include one stepped portion 218. However, cover 204 does not have to be limited to having only one stepped portion such as '218' as shown in Fig. 2. There could be more than one such stepped portions and corresponding number of slots are provided at the internal surface of housing 112. The technical advantage of having, such slots as '220' at housing 112 to provide better coaxial secured alignment between components such as cover 204 and housing 112 as this reduces the effort required to assemble these components.

In accordance with the same or another embodiment, as shown in Fig. 2, pneumatic valve 200 includes a plurality of sealing rings 222 between an internal surface 224 of housing 212 and first stationary member 208 and also between said internal surface 224 of housing 212 and cover 204. It is widely recognized that presence of such sealing rings facilitates establishing fluid tight sealing between external surfaces of stationary member 208 and internal surface 224 of housing 212.

Further, as shown in Fig. 2 at least one sealing ring 222 is provided at or adjacent stepped portion 218 of cover 204 of pneumatic valve 200.

Furthermore, in accordance with the present embodiment, housing 212 includes an internal passageway 224 that facilitates flow of pressurized fluid. For instance, in Fig. 2, internal passageway 224 is shown to run along walls of housing 212 of pneumatic valve 200. However, as can be appreciated by a skilled person, such passageways can also implemented external to housing 212. In any case, the technical advantage of implementing internal passageway 224 to facilitate flow of pressurized fluid as shown in Fig. 2 is, for instance, to spare additional space requirements and/or other alleged constructional complexities that may arise out of using external passageways.

In yet another embodiment or the same embodiment of the present invention, wherein cover 204 includes a fluid passageway 226 that facilitates flow of pressurized fluid. It is preferably noted that internal passageway 224 of housing 212 and fluid passageway 226 of cover 204 are directly connected.

For instance, when there is a need to relieve pressurized fluid from pneumatic valve 200, fluid passageway 226 and internal passageway 224 may be directly or indirectly connected to a relief port 230 for ventilating the pressurized fluid. At the same region of pneumatic valve 200, for instance, a silencer 234 can also be provided to reduce the amount of noise generated due to relief of the pressurized air from pneumatic valve 200.

In still another embodiment of the present invention, pneumatic valve 200 further comprises a first port P22 for supplying control pressure for controlling the brakes (not labeled) associated with wheels (not labeled) of the trailer portion (not labeled), and a second port P21 to provide supply pressure to the brakes associated with the wheels of the trailer portion, and wherein each of the first and second ports P21 and P22 are demarcated using unique or different colors, preferably the second port P22 with yellow and the first port P21 with red. The technical purpose is to clearly identify which port performs which function so that the connection lines within a pneumatic brake system can be appropriately connected.

Furthermore, Fig. 2 shows, e.g., an inlet port 232 for receiving pressurized fluid for facilitating control of valve 200 and an exhaust or a relief port 230 for relieving the pressurized fluid when necessary and a silencer 234 for reducing the noise generated during the operation of pneumatic valve 200.

It is noted herewith that the functionality of different components or all the components are not explained herewith as they are not believed to be necessary to define the current invention. However, for general background information, of working principle of such pneumatic valves or trailer control valves, attention is drawn to various sources cited in the background section of the present application. In one or more embodiments, above-mentioned pneumatic valves can alternatively also be referred to as `relay valves'. As known to the skilled person, the term 'relay' has a meaning, in particular that relay valve "relays" a predetermined brake pressure signal (both a control brake pressure and a supply brake pressure) received from, e.g., a brake signal transmitter or a foot brake valve, which is closely arranged in structural relationship with a brake pedal.

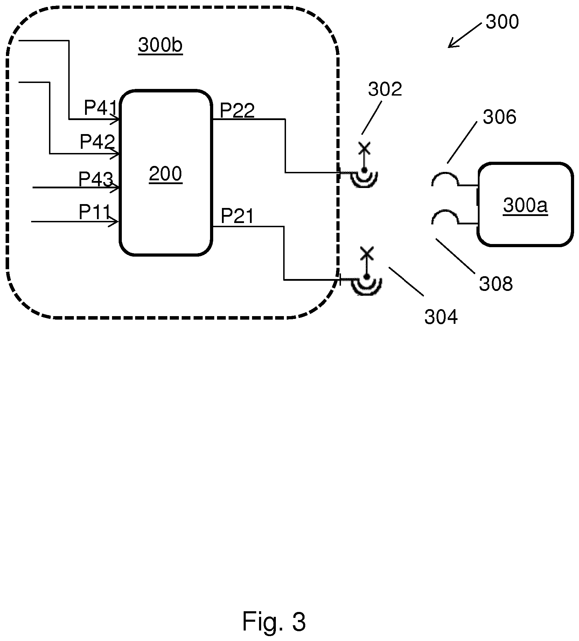

Fig. 3 illustrates how pneumatic valve 200 is connected to a trailer 300a in accordance with an embodiment of the present invention. Valve 200 is provided at towing vehicle 300b. Towing vehicle 300b is connected to trailer 300a.

In accordance with the embodiment associated with Fig. 3, pneumatic valve 200 is part of a trailer brake system 300. As shown in Fig. 3, valve 200 is connected to trailer 300a. In accordance with the same or another embodiment, for instance, trailer 300a can also be a semi-trailer. In addition to what has been shown in Fig. 2, valve 200 of the present invention is shown with ports such as P11, P41, P42, and P43. Each of these ports has unique functions as will be apparent to a person skilled in the field of pneumatic brake systems. For instance, P11, is a port dedicated to receive supply pressure from e.g., a primary air reservoir. P41, for instance, is configured to receive a control pressure from a first brake circuit associated with a foot brake valve or a brake signal transmitter attached to a brake pedal of the vehicle. P42, for instance, similarly is configured to receive a control pressure from a second brake circuit associated with the foot brake valve or the brake signal transmitter attached to the brake pedal of the vehicle. P43, for instance, is configured to receive control pressure from a hand brake valve. P21, for instance, is configured to provide supply pressure to the brakes associated with e.g., actuators each of the wheels of trailer 300a whereas P22, for instance, could be configured to provide control pressure that is required to determine whether e.g., the actuators of the trailer brakes are to be activated or not. In another embodiment, port P22, may supply also to axle control valves (not labeled) associated with each of the axles (not labeled) of trailer 200.

In the same embodiment, for instance, coupling heads 302 and 304 are shown to be in a disconnected state. However, they are configured to be connected to trailer coupling heads 306 and 308 associated with trailer 300a. For instance, coupling heads 302 and 304 are provided at towing vehicle 300b.

### REFERENCE SIGNS (PART OF THE DESCRIPTION)

100 - conventional trailer control valve
102a, 102b - safety rings
104 - first guide member
106 - second guide member
108 - piston
112 - housing
114 - another piston within trailer control valve 100
116 - valve
118 - spring
200 - pneumatic valve according to the present invention
202 - longitudinal or vertical axis; axis that is vertical in relation to orientation of ports P21 and P22
204 - upper cover
206 - cylindrical extension
208 - first stationary member
210 - top surface of first stationary member 208
212 - housing
214 - first slot
216 - a bottom surface of first stationary member 208
218 - a stepped portion
220 - second slot
222 - sealing rings
224 - internal passageway
226 - fluid passageway
228 - contact region between first stationary member 208 and extension 206
230 - exhaust or relief port
232 - inlet port for e.g., receiving control pressure to control valve 200
234 - silencer
A - first chamber
B - second chamber
P21 - first port (e.g., supply pressure port for trailer brakes)
P22 - second port (e.g., control pressure port for the trailer brakes)
P41 - port for receiving control pressure form a first brake circuit
P42 - port for receiving control pressure from a second brake circuit
P43 - port for receiving control pressure from a hand brake valve
300 - trailer brake system
300a - trailer
300b - towing vehicle
302, 304, 306, 308 - coupling heads

## Claims

1. A pneumatic valve (200) for controlling brakes of a trailer (300a), comprising:
a cover (204) being symmetric around a longitudinal axis (202), wherein the cover (204) includes a cylindrical extension (206); and
a first stationary member (208) arranged coaxial to the cover (204), and including a top surface (210), wherein the top surface (210) is in direct contact with the cylindrical extension (206) of the cover (204),
wherein the cylindrical extension (206) is integral with the cover (204) and is configured to facilitate securing the position of the first stationary member (208),
wherein the pneumatic valve (200) includes a housing (212), wherein the housing (212) comprises a first slot (214) for receiving the first stationary member (208),
wherein the housing (212) includes an internal passageway (224) that facilitates flow of pressurized fluid, and
**characterized in that** the cover (204) includes a fluid passageway (226) that facilitates flow of pressurized fluid, wherein the internal passageway (224) of the housing (212) and the fluid passageway (226) of the cover (204) are directly connected.

2. The pneumatic valve (200) of claim 1, wherein the first slot (214) receives a bottom surface (216) of said first stationary member (208), and wherein the first stationary member (208) is locked in its position due to the direct contact with the cylindrical extension (206) on the top surface (210) and due to the first slot (214) of the housing (212) at the bottom surface (216).

3. The pneumatic valve (200) of claim 2, wherein the cover (204) includes a stepped portion (218) and the housing (212) includes a second slot (220) that is configured to receive the stepped portion (218) of the cover (204).

4. The pneumatic valve (200) of any one of claims 2 and 3, wherein the pneumatic valve (200) includes a plurality of sealing rings (222) between an internal surface (224) of the housing (212) and the first stationary member (208) and also between said internal surface (224) of the housing (212) and the cover (204).

5. The pneumatic valve (200) of claims 3 and 4, wherein at least one sealing ring (222) of the plurality of sealing rings (222) is provided at the stepped portion (218) of the cover (204).

6. The pneumatic valve (200) of claim 1, wherein the fluid passageway (226) and the internal passageway (224) are directly or indirectly connected to a relief port (230) for ventilating the pressurized fluid.

7. The pneumatic valve (200) of any one of the above claims, wherein the pneumatic valve (200) further comprises a first port (P22) for supplying control pressure for controlling the brakes associated with wheels of the trailer (300a), and a second port (P21) to provide supply pressure to the brakes associated with the wheels of the trailer (300a), and wherein each of the first and second ports (P21 and P22) are demarcated using different colors, preferably the second port (P22) with yellow and the first port (P21) with red.

8. A trailer brake system (300) comprising the pneumatic valve (200) as claimed in any one of the above-mentioned claims.

## Patentansprüche

1. Pneumatisches Ventil (200) zum Steuern der Bremsen eines Anhängers (300a), das Folgendes umfasst:
eine Abdeckung (204), die symmetrisch um eine Längsachse (202) ist, wobei die Abdeckung (204) eine zylindrische Erweiterung (206) umfasst; und
ein erstes stationäres Element (208), koaxial zur Abdeckung (204) angeordnet und eine obere Oberfläche (210) umfassend, wobei die obere Oberfläche (210) in direktem Kontakt mit der zylindrischen Erweiterung (206) der Abdeckung (204) ist,
wobei die zylindrische Erweiterung (206) integral mit der Abdeckung (204) ist und dazu ausgelegt ist, Sichern der Position des ersten stationären Elements (208) zu ermöglichen,
wobei das pneumatische Ventil (200) ein Gehäuse (212) umfasst, wobei das Gehäuse (212) eine erste Aussparung (214) zum Aufnehmen des ersten stationären Elements (208) umfasst,
wobei das Gehäuse (212) einen internen Durchgang (224) umfasst, der Fluss eines druckbeaufschlagten Fluids ermöglicht, und
**dadurch gekennzeichnet, dass**
die Abdeckung (204) einen Fluiddurchgang (226) umfasst, der Fluss eines druckbeaufschlagten Fluids ermöglicht, wobei der interne Durchgang (224) des Gehäuses (212) und der Fluiddurchgang (226) der Abdeckung (204) direkt verbunden sind.

2. Pneumatisches Ventil (200) nach Anspruch 1, wobei die erste Aussparung (214) eine untere Oberfläche (216) des ersten stationären Elements (208) aufnimmt, und wobei das erste stationäre Element (208) aufgrund des direkten Kontakts mit der zylindrischen Erweiterung (206) an der oberen Oberfläche (210) und aufgrund der ersten Aussparung (214) des Gehäuses (212) an der unteren Oberfläche (216) an seiner Position verriegelt ist.

3. Pneumatisches Ventil (200) nach Anspruch 2, wobei die Abdeckung (204) einen gestuften Teil (218) umfasst und das Gehäuse (212) eine zweite Aussparung (220) umfasst, die dazu ausgelegt ist, den gestuften Teil (218) der Abdeckung (204) aufzunehmen.

4. Pneumatisches Ventil (200) nach einem der Ansprüche 2 und 3, wobei das pneumatische Ventil (200) mehrere Dichtungsringe (222) zwischen einer internen Oberfläche (224) des Gehäuses (212) und dem ersten stationären Element (208) sowie auch zwischen der internen Oberfläche (224) des Gehäuses (212) und der Abdeckung (204) umfasst.

5. Pneumatisches Ventil (200) nach Ansprüchen 3 und 4, wobei zumindest ein Dichtungsring (222) der mehreren Dichtungsringe (222) am gestuften Teil (218) der Abdeckung (204) bereitgestellt ist.

6. Pneumatisches Ventil (200) nach Anspruch 1, wobei der Fluiddurchgang (226) und der interne Durchgang (224) direkt oder indirekt mit einer Entlastungsöffnung (230) zum Ablassen des druckbeaufschlagten Fluids verbunden sind.

7. Pneumatisches Ventil (200) nach einem der vorhergehenden Ansprüche, wobei das pneumatische Ventil (200) ferner eine erste Öffnung (P22) zum Zuführen von Steuerdruck zum Steuern der Bremsen in Verbindung mit den Rädern des Anhängers (300a) und eine zweite Öffnung (P21) zum Bereitstellen von Versorgungsdruck für die Bremsen in Verbindung mit den Rädern des Anhängers (300a) umfasst und wobei jede der ersten und zweiten Öffnungen (P21 und P22) unter Verwendung unterschiedlicher Farben gekennzeichnet ist, die zweite Öffnung (P22) vorzugsweise mit gelb und die erste Öffnung (P21) vorzugsweise mit rot.

8. Anhängerbremssystem (300), umfassend das pneumatische Ventil (200) nach einem der vorhergehenden Ansprüche.

## Revendications

1. Soupape pneumatique (200) pour commander des freins d'une remorque (300a), comprenant :
un couvercle (204) symétrique autour d'un axe longitudinal (202), dans laquelle le couvercle (204) inclut une extension cylindrique (206) ; et
un premier élément stationnaire (208) agencé de façon coaxiale au couvercle (204), et incluant une surface supérieure (210), dans laquelle la surface supérieure (210) est en contact direct avec l'extension cylindrique (206) du couvercle (204),
dans laquelle l'extension cylindrique (206) est monobloc avec le couvercle (204) et est configurée pour faciliter la fixation de la position du premier élément stationnaire (208), dans laquelle la soupape pneumatique (200) inclut un boîtier (212), dans laquelle le boîtier (212) comprend une première fente (214) pour recevoir le premier élément stationnaire (208),
dans laquelle le boîtier (212) inclut une voie de passage interne (224) qui facilite l'écoulement de fluide sous pression, et
**caractérisée en ce que**
le couvercle (204) inclut une voie de passage de fluide (226) qui facilite l'écoulement de fluide sous pression, dans laquelle la voie de passage interne (224) du boîtier (212) et la voie de passage de fluide (226) du couvercle (204) sont raccordées directement.

2. Soupape pneumatique (200) selon la revendication 1, dans laquelle le première fente (214) reçoit une surface inférieure (216) dudit premier élément stationnaire (208), et dans laquelle le premier élément stationnaire (208) est bloqué dans sa position en raison du contact direct avec l'extension cylindrique (206) sur la surface supérieure (210) et en raison de la première fente (214) du boîtier (212) au niveau de la surface inférieure (216).

3. Soupape pneumatique (200) selon la revendication 2, dans laquelle le couvercle (204) inclut une partie épaulée (218) et le boîtier (212) inclut une seconde fente (220) qui est configurée pour recevoir la partie épaulée (218) du couvercle (204).

4. Soupape pneumatique (200) selon l'une quelconque des revendications 2 et 3, dans laquelle la soupape pneumatique (200) inclut une pluralité de bagues d'étanchéité (222) entre une surface interne (224) du boîtier (212) et le premier élément stationnaire (208) et également entre ladite surface interne (224) du boîtier (212) et le couvercle (204).

5. Soupape pneumatique (200) selon les revendications 3 et 4, dans laquelle au moins une bague d'étanchéité (222) de la pluralité de bagues d'étanchéité (222) est prévue au niveau de la partie épaulée (218) du couvercle (204).

6. Soupape pneumatique (200) selon la revendication 1, dans laquelle la voie de passage de fluide (226) et la voie de passage interne (224) sont raccordées directement ou indirectement à un orifice de détente (230) pour purger l'air du fluide sous pression.

7. Soupape pneumatique (200) selon l'une quelconque des revendications précédentes, dans laquelle la soupape pneumatique (200) comprend en outre un premier orifice (P22) pour effectuer l'alimentation en une pression de commande pour commander les freins associés à des roues de la remorque (300a), et un second orifice (P21) pour fournir une pression d'alimentation aux freins associés aux roues de la remorque (300a), et dans laquelle chacun des premier et second orifices (P21 et P22) sont démarqués en utilisant des couleurs différentes, de préférence le second orifice (P22) avec du jaune et le premier orifice (P21) avec du rouge.

8. Système de frein de remorque (300), comprenant la soupape pneumatique (200) selon l'une quelconque des revendications susmentionnées.
